# EUROPEAN PATENT APPLICATION

(11) **EP 2 264 579 A2**
(43) Date of publication of application: **22.12.2010**
(21) Application number: 10164371.6
(22) Date of filing: 28.05.2010
(51) Int. Cl.: G06F 3/048, G06F 3/02, G06F 3/023, G06F 9/44

(54) **Method and electronic device for displaying screen image**

(30) Priority: 08.06.2009 KR 20090050459
(71) Applicant: SAMSUNG ELECTRONICS CO., LTD., Suwon-si Gyeonggi-do 442-742 (KR)
(72) Inventor: Choi, Jin-wook, Gyeonggi-do (KR); Cho, Seung-kee, Gyeonggi-do (KR); Cho, Cheon-yong, Gyeonggi-do (KR)
(74) Representative: Fearnside, Andrew Simon

(57) **Abstract**

A method and an electronic device for displaying a screen are provided. The method for displaying a screen may include storing information regarding display state of the screen (S310) and displaying the screen according to the stored information (S330). Accordingly, a user can be provided with a desired working environment more conveniently and rapidly.

## Description

### CROSS-REFERENCE TO RELATED APPLICATIONS

This application claims priority from Korean Patent Application No. 10-2009-0050459, filed on June 8, 2009, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a method for displaying a screen, a method for generating a screen, a method for operating an application, and an electronic device using the same, and more particularly, though not exclusively, to a method for displaying a screen, a method for generating a screen, and a method for operating an application to provide a user with a convenient working environment, and an electronic device using the same.

### 2. Description of the Related Art

Recently, a processing device such as a central processing unit (CPU) and a storage device such as a memory have developed rapidly, allowing a user to perform multi-tasking. For instance, a user may work on a plurality of applications such as a note pad, a word processor, an Excel file, a power point, and the Internet simultaneously on a single screen.

However, in order to perform a plurality of tasks on a single screen, the plurality of applications must be individually opened, causing inconvenience for a user since the user must select an execution icon for each application one by one. Especially, a user who needs to perform a plurality of tasks at the same time everyday may feel such inconvenience even more severely. In addition, in order to operate a plurality of applications on a single screen, windows for the plurality of applications need to be displayed on the single screen, and the location and the size of the windows for each application need to be adjusted accordingly. Since the user must also adjust the location and the size of each window one by one, this may cause great inconvenience to a user who performs a plurality of tasks on a single screen repeatedly.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above. According to the present invention there is provided an apparatus and method as set forth in the appended claims. Other features of the invention will be apparent from the dependent claims, and the description which follows.

Accordingly, in an aspect of the present invention, there may be provided a method for displaying a screen, a method for generating a screen, and a method for operating an application to provide a superior working environment to a desktop user, and an electronic device using the same.

A method for displaying a screen, according to an exemplary embodiment of the present invention, comprises storing information regarding a display state of a plurality of applications and displaying a screen according to the stored information by executing the plurality of applications.

The information may include information regarding a layout in which the plurality of applications are displayed on a screen or information regarding a location of the plurality of applications in the screen.

The storing may map and store the information into a predetermined button, and the displaying may display the screen if the predetermined button is selected.

The predetermined button may be formed in the monitor, the predetermined button may be used for storing information and displaying the screen if the monitor is operated in a first mode, and the predetermined button may be used for setting a basic environment of the monitor if the monitor is operated in a second mode.

There may be a plurality of buttons, and information regarding the display state may be stored differently in each of the plurality of buttons.

The storing may comprise setting a layout, matching the plurality of applications to divided screens generated by the layout, and storing information regarding the divided screens to which the plurality of applications are matched.

The displaying may display the plurality of applications in the divided screens based on the size of divided screens to which each application is matched.

The matching may match the plurality of applications to the divided screens as an execution icon of the plurality of applications is dragged to the divided screens.

The matching may match the plurality of applications to the divided screens as an execution path of the plurality of applications is directly input to the divided screens.

The storing may store at least one of information regarding setting state of the plurality of applications, information regarding storage state, and information regarding work state together with information regarding display state, and the displaying may execute the plurality of applications based on the stored information.

The display state may be customized by a user's manipulation.

A method for displaying a screen, according to another exemplary embodiment of the present invention, comprises storing a work environment executed in a plurality of applications and reproducing the work environment on a screen by executing the plurality of applications if the work environment is requested.

The work environment may include at least one of environments regarding display state, setting state, storage state, and work state of the plurality of applications.

A method for generating a screen, by an electronic device for generating the screen displayed on a display device, according to an exemplary embodiment of the present invention, comprises determining a mode of the display device if a predetermined button is selected and generating a screen executing a predetermined application if the mode of the display device is determined to be a first mode.

The method may further comprise generating a graphic user interface (GUI) screen for setting a basic environment of the display device if the mode of the display device is determined to be a second mode.

The predetermined button may include at least one of a button formed in the display device, a button formed in an input means for manipulating display state of the display device, and a button displayed as an item on the screen of the display device.

A method for displaying a screen, according to another exemplary embodiment of the present invention, comprises setting a layout of a screen so as to generate at least one divided screen, matching at least one application to the at least one divided screen, storing information regarding the layout and the matching, and executing and displaying the application matched to each of the at least one divided screen if a predetermined command is input.

An electronic device, according to an exemplary embodiment of the present invention, comprises a storage unit to store information regarding a display state of a plurality of applications and a control unit to display a screen corresponding to the stored information by executing the plurality of applications.

The information may include information regarding a layout in which the plurality of applications are displayed on the screen or information regarding the location of the plurality of applications on the screen.

The storage unit may map and store the information into a predetermined button, and the control unit may display the screen if the predetermined button is selected.

The predetermined button may be formed in the monitor, and the predetermined button may be used to store the information and display the screen if the monitor is operated in a first mode, and the predetermined button may be used to set a basic environment of the monitor if the monitor is operated in a second mode.

There may be a plurality of buttons, and information regarding a display state of the screen may be stored differently in each of the plurality of buttons.

The control unit may set a layout, match the plurality of applications to divided screens generated by the layout, and store information regarding the plurality of applications matched into divided screens in the storage unit.

The control unit may display the plurality of applications on the divided screens based on the size of the divided screens to which each of applications are matched.

The control unit may match the plurality of applications to the divided screens if an execution icon of the plurality of applications is dragged to the divided screens.

The control unit may match the plurality of applications to the divided screens if an execution path of the plurality of applications is directly input to the divided screens.

The storage unit may store at least one of information regarding a setting state of the plurality of applications, information regarding a storage state, and information regarding a work state together with information regarding the display state, and the control unit may execute the plurality of applications based on the stored information.

The display state may be customized by a user's manipulation.

An electronic device, according to another exemplary embodiment of the present invention, comprises a storage unit to store a work environment in which a plurality of applications are executed and a control unit to reproduce the work environment on a screen by executing the plurality of applications if the work environment is requested.

The work environment may include at least one of environments regarding a display state, a setting state, a storage state, and a work state of the plurality of applications.

An electronic device, according to another exemplary embodiment of the present invention, comprises a communication unit to communicate with a display device and a control unit to determine a mode of the display device by communicating with the display device via the communication unit if a predetermined button is selected, and executes and displays predetermined applications on a screen if the mode of the display device is determined to be a first mode.

The control unit may display a GUI screen for setting a basic environment of the display device if it is determined that the display device mode is a second mode.

The predetermined button may include at least one of a button formed in the display device, a button formed in an input means for manipulating a display state of the display device, and a button displayed as an item on a screen of the display device.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 illustrates a personal computer (PC) and a monitor according to an exemplary embodiment of the present invention;
FIG. 2 is a view illustrating a screen appearing when button on a monitor is clicked, according to an exemplary embodiment of the present invention;
FIG. 3 is a flow chart that depicts a method for displaying a screen according to an exemplary embodiment of the present invention;
FIG. 4 is a flow chart that depicts the process of performing two operations according to a monitor mode, according to an exemplary embodiment of the present invention;
FIG. 5 is a flow chart that depicts a mapping method according to an exemplary embodiment of the present invention;
FIG. 6 is a view illustrating a layout of windows according to an exemplary embodiment of the present invention;
FIG. 7 is a flow chart that depicts a mapping method according to another exemplary embodiment of the present invention;
FIG. 8 is a view in which an execution path of an application is directly input to a divided screen, according to an exemplary embodiment of the present invention;
FIG. 9 is a flow chart that depicts a mapping method according to another exemplary embodiment of the present invention;
FIG. 10 is a view illustrating dragging an execution icon of an application to a divided screen, according to an exemplary embodiment of the present invention;
FIG. 11 is a view that depicts the process of mapping information regarding display state, according to an exemplary embodiment of the present invention.
FIG. 12 is a block diagram of a PC according to an exemplary embodiment of the present invention.

### DETAILED DESCRIPTION OF EXEMPLARY EMBODIMENTS of the invention

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in excessive detail since they would obscure the invention unnecessarily.

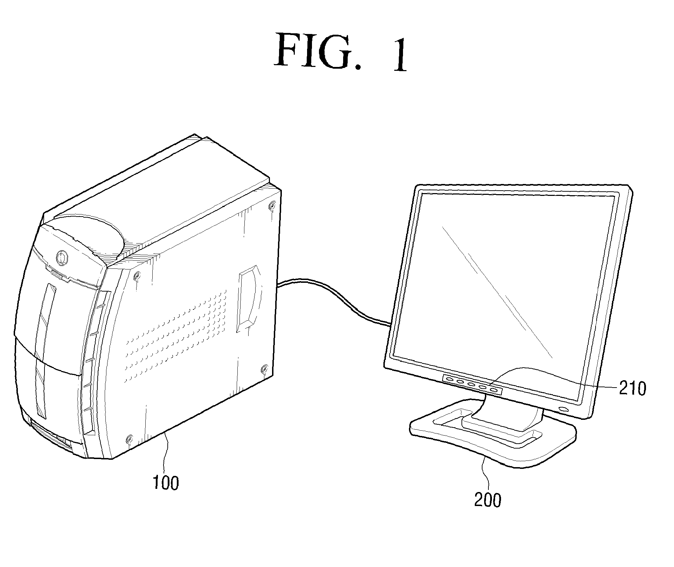

FIG. 1 is a view of a PC 100 and a monitor 200 according to an exemplary embodiment of the present invention.

The PC 100 executes an operating system and an application according to a user's command input via a button on a keyboard, mouse, or the PC 100, and transmits a signal of a screen in which the operating system and the application are executed to the monitor 200. The monitor 200 displays the screen in which the operating system and the application are executed based on the signal received from the PC 100.

The monitor 200 comprises at least one button 210 to adjust resolution, color, on-screen display (OSD), and setting. Accordingly, a user may manipulate the button 210 to adjust a basic environment of the monitor 200 such as brightness, gamma, frequency, and setting value. This may be the original function of the button 210.

In addition, a user may manipulate the button 210 to automatically execute a plurality of applications and display a screen in which windows for the plurality of applications are automatically arranged. That is, the PC 100 checks whether the button is selected regularly, and if it is determined that the button 210 is selected, the PC 100 automatically executes an application based on mapping information of the selected button, arranges windows for the application, and transmits a signal to display the screen to the monitor 200.

There may be a plurality of buttons on the monitor 200, as illustrated in FIG. 1, and in this case, different information may be mapped to each button.

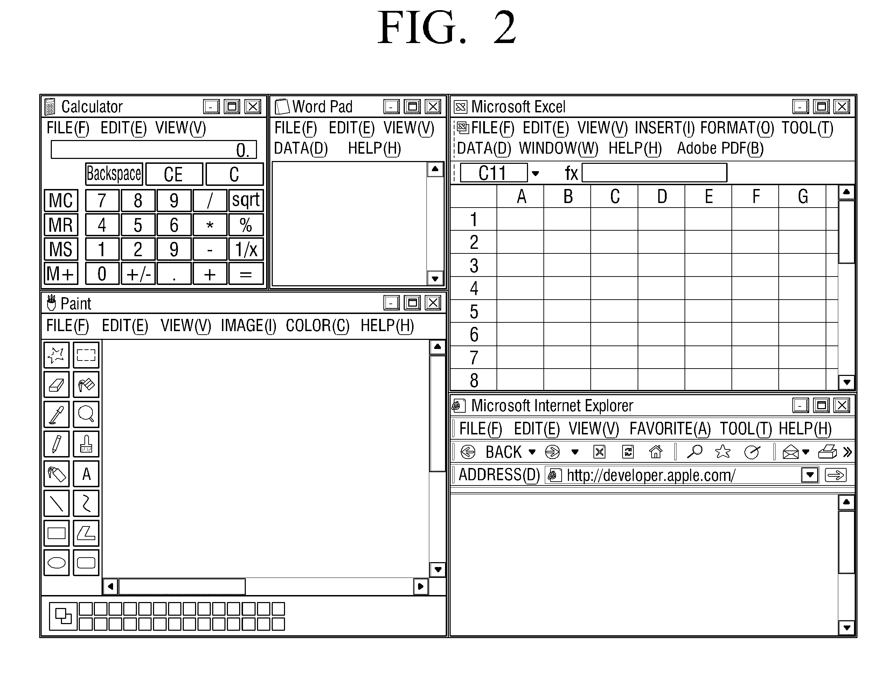

Hereinafter, a screen displayed in the monitor 200 will be explained in detail with reference to FIG. 2.

FIG. 2 is a view illustrating a screen appearing in the monitor 200 when the button 210 is selected. If a user selects the button 210, five applications, that is a calculator, wordpad, Excel, paint, and Internet Explorer are displayed on the screen.

This screen may be preset by a user. That is, a user may preset the screen so that five applications (calculator, wordpad, Excel, paint, and Internet Explorer) are automatically executed, and when the five applications are executed, windows for each application have a layout as illustrated in FIG. 2. In addition, a user may map the present information to the button 210 so that as the mapped button is selected, applications are executed according to the present information and the executed applications have a preset layout.

As such, if a user selects the button 210, the five applications are automatically executed, and a layout for the executed applications is automatically set. Therefore, a working environment appropriate for a user may be provided more conveniently and rapidly.

In the above description, five applications are executed, but this is only an example. The present invention may be applied to a case when less than five or more than five applications are executed.

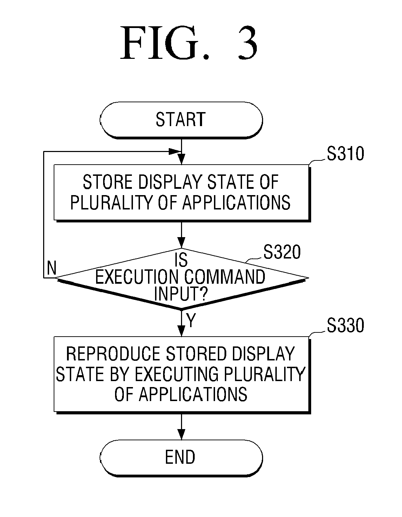

FIG. 3 is a flow chart provided to explain a method for displaying a screen according to an exemplary embodiment of the present invention.

As illustrated in FIG. 3, the PC 100 stores a display state of a plurality of applications mapped into the button 210 (S310). The display state represents the type of executed applications and display state of a layout for applications.

If the button 210 is selected and a command to execute a stored display state is received (S320-Y), the PC 100 executes a plurality of applications and displays a layout for applications according to the stored display state, so that the stored display state may be reproduced (S330). Accordingly, a screen corresponding to a display state pre-stored in the PC 100 is displayed.

As such, by simply selecting the button 210, a user may not only execute a desired application but also determine a layout for the application.

In the above description, it has been explained that using the button 210, not only resolution, color, OSD, and setting of the monitor 200 may be adjusted, but also a plurality of applications may be automatically executed and windows for the plurality of applications may be automatically arranged.

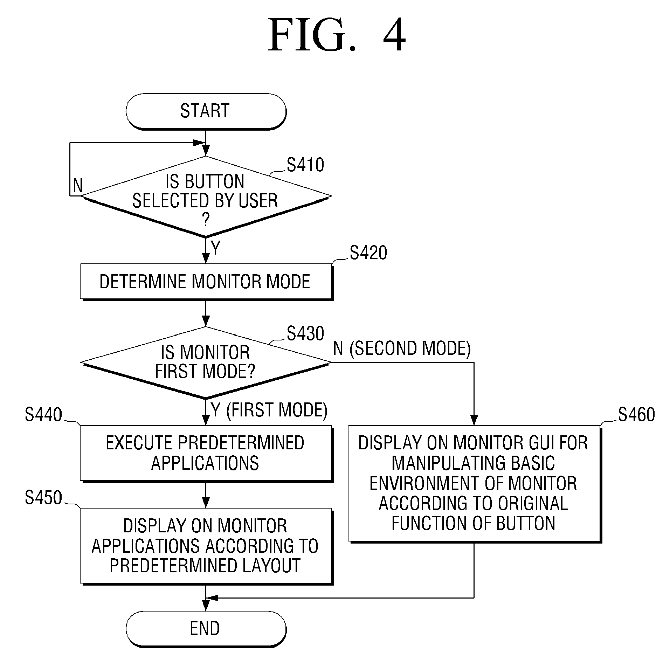

Hereinafter, the process of two operations using the button 210 will be explained with reference to FIG. 4.

FIG. 4 is a flow chart provided to explain the process of performing two operations according to a mode of the monitor 200.

If a user selects the button 210 (S410-Y), the PC 100 determines a current mode of the monitor 200 (S420).

The mode of the monitor 200 is divided into the first mode for executing a plurality of applications and displaying windows for the plurality of applications automatically and the second mode for adjusting resolution, color, OSD, and setting of the monitor 200.

If the current mode of the monitor 200 is the first mode (S430-Y), the PC 100 executes an application or applications (S440) and displays a window for the application(s) according to a preset layout on the screen of the monitor 200 (S450).

If the current mode of the monitor 200 is the second mode, the PC 100 displays a graphic user interface (GUI) for manipulating the basic environment of the monitor 200, which may be the original function of the button 210, on the screen of the monitor 200 (S460).

As described above, the button 210 of the monitor 200 may be used to (1) manipulate the basic environment of the monitor 200 such as brightness, gamma, frequency, and setting value, performing its original function, or may be used to (2) execute a plurality of applications automatically according to their roles set by a user and display a screen in which windows for the plurality of applications are automatically arranged.

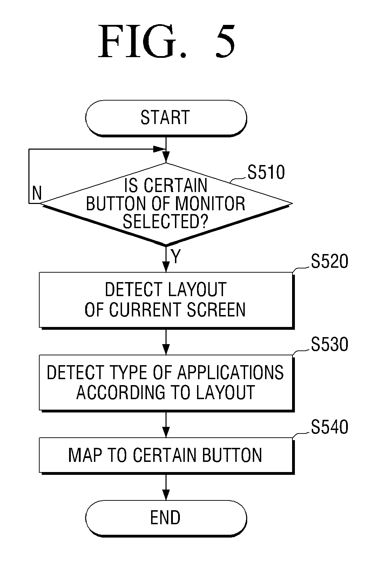

Hereinafter, the type of application executed automatically and a method for determining a layout of an application and mapping it into a button will be explained with reference to FIG. 5 to FIG. 11.

FIG. 5 is a flow chart provided to explain a mapping method according to an exemplary embodiment of the present invention.

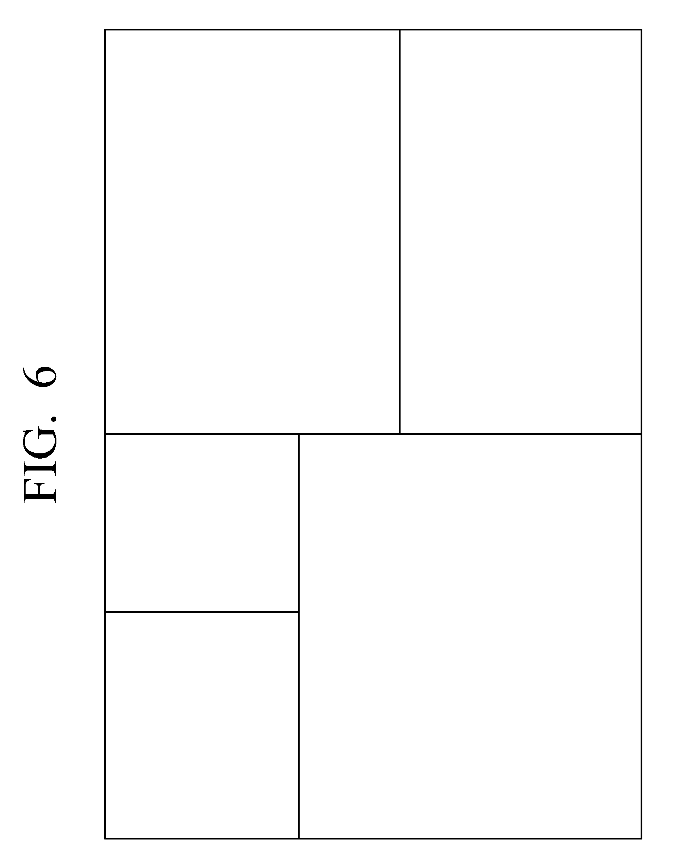

If the button 210 of the monitor 200 is selected (S510-Y), the PC 100 detects a layout of windows displayed on the current screen of the monitor 200 (S520). For instance, if the current screen of the monitor 200 is such as that shown in FIG. 2, a layout of windows in FIG. 6 is detected from the screen in FIG. 2. FIG. 6 is a view illustrating a layout of windows.

In addition, the PC 100 detects the type of each application executed on the current screen of the monitor 200 according to their layout (S530). Specifically, the PC 100 detects not only the type of application which is currently being executed, but also detects the location of the layout on which the applications are placed. For instance, if the current screen of the monitor 200 is such as that shown in FIG. 2, the PC 100 detects from the screen of FIG. 2 that an application of a calculator is displayed on an upper left, an application of wordpad on an upper center, an application of Excel on an upper right, an application of paint on a lower left, and an application of Internet Explorer on a lower right.

The PC 100 stores information regarding the detected layout of windows and information regarding the type of application according to their layout, and maps the information into the button 210 of the monitor 200. Accordingly, the PC 100 stores information not only regarding the layout and the type of application according to the layout but also regarding the button 210 into which the above information is mapped.

Therefore, even if the above-mentioned five applications are not currently open, a user may select the mapped button 210 to automatically execute the five applications and arrange windows for the five applications according to the previous layout.

As described above, a user may be provided with a desired working environment more conveniently and rapidly as a customized display state is reproduced by the user.

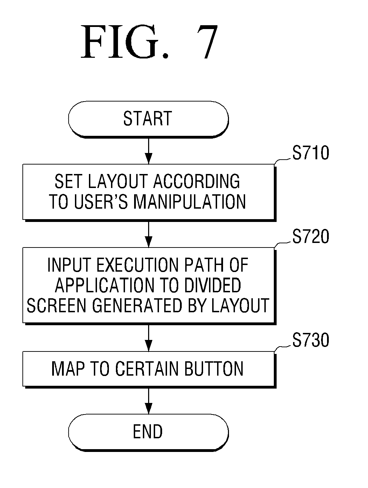

FIG. 7 is a flow chart provided to explain a mapping method according to another exemplary embodiment of the present invention.

The PC 100 sets a layout according to a user's manipulation (S71 0). A separate layout setting program for setting a layout or a separate display setting program capable of setting a layout may be used.

Once a layout is set, the PC 100 matches applications to each of divided screens according to a user's manipulation of inputting an execution path of an application to the divided screen generated by the set layout (S720). That is, a user may input an execution path of an application to be executed and displayed on a divided screen directly into each of the divided screens generated by the set layout.

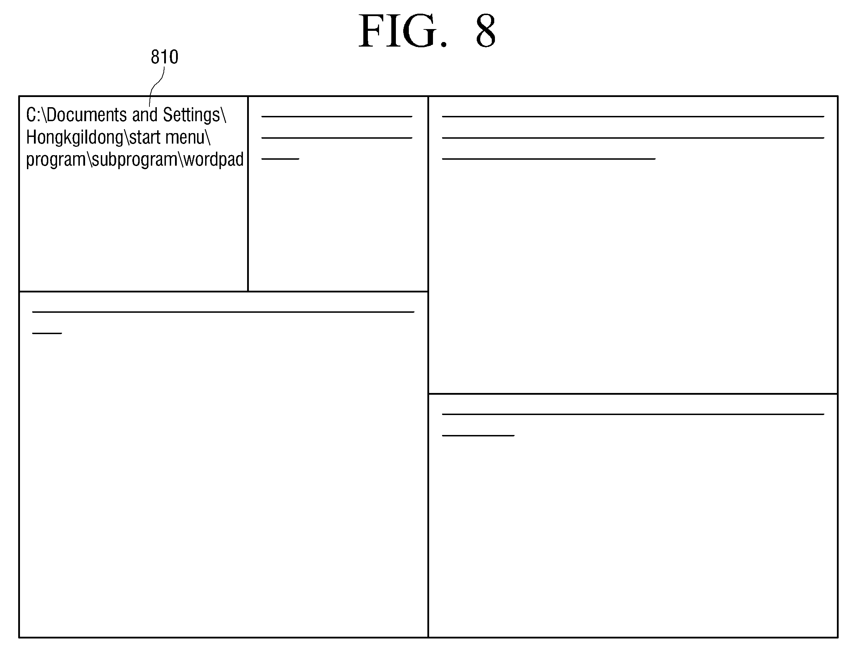

For instance, a user may directly input an execution path 810 "C:\Documents and Settings\Hongkgildong\start menu\program\subprogram\ wordpad" to the upper left side of the divided screen and input other applications to the other divided screens as illustrated in FIG. 8 to match applications to be displayed on the divided screens generated by the set layout. FIG. 8 is a view in which an execution path of an application is directly input to a divided screen. An execution path of an application may be input using a separate execution path input program for inputting an execution path of an application or a separate display setting program capable of inputting an execution path.

If the setting of a layout and the inputting of an execution path of applications are completed, information regarding the layout and the type of application according to the layout is mapped into a certain button by a user, thereby completing the setting of screen display (S730). Accordingly, a user may select the mapped button 210 to automatically execute an application to which an execution path is input and arrange windows for applications according to the set layout.

As described above, a user may be provided with a desired working environment more conveniently and rapidly as a customized display state is reproduced by the user.

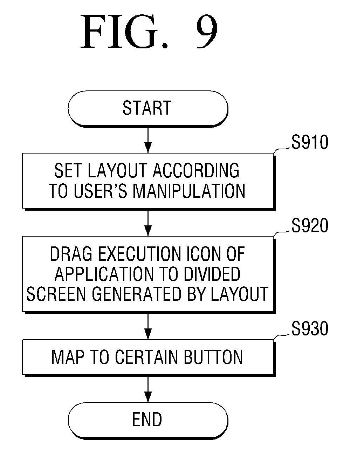

FIG. 9 is a flow chart provided to explain a mapping method according to another exemplary embodiment of the present invention.

The PC 100 sets a layout according to a user's manipulation (S91 0). A separate layout setting program for setting a layout or a separate display setting program capable of setting a layout may be used.

Once a layout is set, the PC 100 matches applications to each of divided screens according to a user's manipulation of dragging an execution icon of an application to the divided screen generated by the set layout (S920). That is, a user may drag an execution icon to be executed and displayed to each of the divided screens generated by the set layout to execute and display an application corresponding to the execution icon on each of the divided screens.

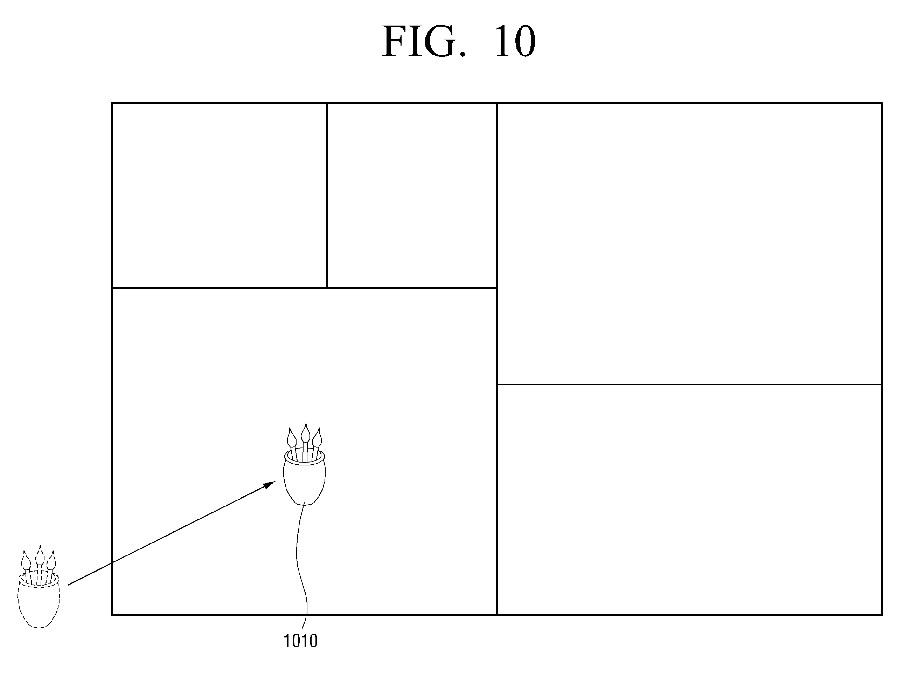

For instance, a user may drag a "paint" execution icon 1010 to the lower left side of the divided screen as illustrated in FIG. 10 to mach an application to be displayed on the divided screen generated by the set layout. FIG. 10 is a view illustrating dragging an execution icon of an application to a divided screen.

An execution icon of an application may be dragged using a separate program for dragging an execution icon of an application or a separate display setting program for displaying an application corresponding to a dragged execution icon on a divided screen.

If the setting of a layout and the dragging of an execution icon of applications are completed, information regarding the layout and the type of application according to the layout is mapped into a certain button by a user, thereby completing the setting of screen display (S930).

Accordingly, a user may select the mapped button 210 to automatically execute an application of which execution icon is dragged and arrange windows for applications according to the set layout.

As described above, a user may be provided with a desired working environment more conveniently and rapidly as a customized display state is reproduced by the user.

There may be a plurality of buttons in the monitor 200, as illustrated in FIG. 1. Accordingly, a user may store information regarding display state in a button that he or she wants from among a plurality of buttons and may store different information regarding display state in each of the plurality of buttons.

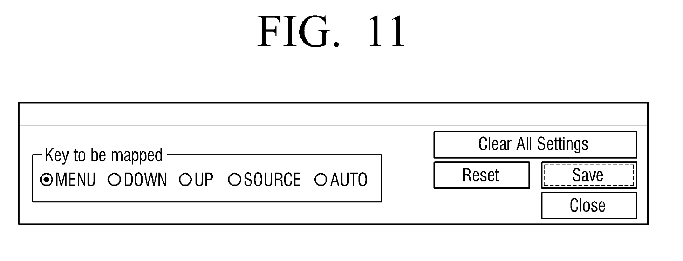

The process of mapping information regarding display state into a button will be explained with reference to FIG. 11.

FIG. 11 is a view provided to explain the process of mapping information regarding display state. Information regarding display state may be mapped into a button using a separate button mapping program or a separate display setting program for mapping information regarding display state into a button.

If the setting of a layout and the setting of the type of application displayed on each divided screen are completed, information regarding the layout setting and the type of application displayed on each divided screen may be mapped into a certain button that a user wants from among a plurality of buttons.

For instance, if a user selects a "MENU" icon and then selects a "SAVE" icon as illustrated in FIG. 11, information regarding display state is mapped into the "MENU" button and stored.

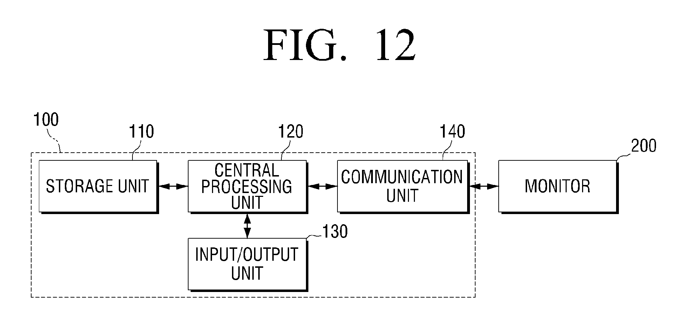

FIG. 12 is a block diagram of the PC 100 which has been explained above. For convenience of explanation, the monitor 200 is illustrated with the PC 100.

The PC 100, according to an exemplary embodiment of the present invention, comprises a storage unit 110, a central processing unit 120, an input/output unit 130, and a communication unit 140.

The storage unit 110 stores various programs including an operation system and application.

In particular, the storage unit 110 stores information regarding a layout of windows and the type of application of each layout as information regarding display state, and stores information regarding the button 210 of the monitor 200 into which the layout and the type of application are mapped.

The storage unit 110 may store a display setting program comprising a layout module, a setting module, and an execution module.

As described above, the layout module is a module for setting a layout according to a user's manipulation. Therefore, a user may set a layout of a screen temporarily using the display setting program.

As described above, the setting module is a module for matching an application to a divided screen generated by a layout set according to a user's manipulation. Accordingly, a user may input an execution path of an application to be executed and displayed on each divided screen directly, or may execute and display a corresponding application on each divided screen by dragging an execution icon of an application to be executed and displayed on each divided screen.

The execution module is a module for executing an application based on mapping information of the button 210 and generating a screen in which each application is displayed according to its layout.

The central processing unit 120 is the center of the PC 100 and serves to interpret and execute a command. Specifically, the central processing unit 120 processes information input to the input/output unit 130 via an input device and outputs the processed information to an output device.

In particular, the central processing unit 120 checks whether the button 210 in the monitor 200 is selected regularly, and displays the result on the screen of the monitor 200. Specifically, the central processing unit 120 may monitor the monitor 200 following an Inter-IC (I2C) method in order to check whether the button of the monitor 200 is checked. If one of the buttons 210 is selected, a determination is made as to which button is selected, and information regarding the display state mapped into the selected button is read out from the storage unit 110. The central processing unit 120 executes a preset application and displays applications on the monitor 200 according to the preset layout using information regarding display state read out from the storage unit 110.

The input/output unit 130 transmits data input via an input device such as a mouse and keyboard to the central processing unit 120, and transmits the data processed in the central processing unit 120 to an output device such as the monitor 200 and a speaker.

The communication unit 140 serves as a path for communication between the PC 100 and various input/out devices. In particular, the communication unit 140 receives information regarding which button is selected from the monitor 200 and transmits the information to the central processing unit 120, and transmits data regarding screen display received from the central processing unit 120 to the monitor 200.

Accordingly, a user may be provided with a desired working environment more conveniently and rapidly as a plurality of applications are executed together by a simple manipulation and the location and size of windows for applications are automatically adjusted.

In the above description, information regarding display state is mapped into the button 210 of the monitor 200, and if the button 210 is selected, a preset layout and an application according to the layout are displayed, but this is only an example. The present invention may be applied to a case when information regarding display state is mapped into a button other than the button 210, such as a button in a keyboard connected to the PC 100 or a button in the main body of the PC 100. The present invention may also be applied to a case when information regarding display state of a certain item displayed on the screen is mapped.

In the above exemplary embodiment, the PC 100 and the monitor 200 are described as an example to explain a method for displaying a screen, but this is only an example. The present invention may be applied to a display device such as television (TV) and a personal media player (PMP) or any device which is operated in connection with the above display devices or control the above display devices.

For instance, if a user wishes to view broadcasting programs broadcast through a plurality of channels of a TV in a single screen, the user may set a layout, match each broadcasting program to a divided screen generated by the set layout, and map a certain channel number to view the plurality of broadcasting programs according to the set layout. In addition, a user may customize the size of layout so that a certain broadcasting program is displayed in a bigger size and a certain broadcasting program is broadcast in a smaller size.

In the above description, information regarding only display state is stored and reproduced when a user selects a certain button, but this is only an example. Not only information regarding display state but also information regarding a comprehensive working environment can be reproduced. The working environment includes the setting of an application, storage state of an application, and operation state of an application.

The setting state represents the setting of various tools or options of an application. For instance, if a font size in an Excel document is set to be 10 point font in the PC 100, the font size in an Excel application executed after the button in the monitor 200 is clicked is also reproduced to be 10 point font.

The storage state represents storage state of documents executed in an application. For instance, the PC 100, when an application is executed, may store information not only regarding a current work state of a document but also a work state when the document was finally stored so that when the button 210 is selected, the PC 100 may display the work state when the document was finally stored.

The operation state represents a state of documents when an application is executed. For instance, when an application is mapped into the button 210, the PC 100 stores information regarding an opened document when the application is executed so that when the button 210 is selected, the PC 100 may display the same document. In addition, if two documents are opened and only one document is displayed when the application is executed, the PC 100 may also display this state as it is. Accordingly, a user may work on other documents by moving a tab of an application.

In the above description, applications mapped into the button are displayed as being pre-stored, but this is only an example. The present invention may be applied to a case when an application is displayed based on the size of a divided screen generated by the set layout. For instance, if an application is displayed smaller than a layout on a divided screen at the time when the application is mapped into the button, the application may be displayed magnified to correspond to the layout when the button is selected to reproduce a working environment.

As described above, the present invention may provide a desired working environment more conveniently and rapidly as a plurality of applications are executed together by a simple manipulation and the location and size of windows for applications are automatically adjusted. The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for displaying a screen, the method comprising:
storing information regarding a display state of a plurality of applications (S310); and
displaying a screen according to the stored information (S330) by executing the plurality of applications.

2. The method according to any preceding claim, wherein the information comprises information regarding a layout in which the plurality of applications are displayed on the screen or information regarding a screen location at which the plurality of applications are displayed on the screen.

3. The method according to any preceding claim, wherein the storing the information comprises mapping and storing the information into a selectable button, and wherein the displaying the screen comprises displaying the screen if the button is selected (S410).

4. The method as claimed in claim 3, wherein the button is formed in a monitor,
wherein the button is used to store information and display the screen if the monitor is operated in a first mode, and the button is used to set a basic environment of the monitor if the monitor is operated in a second mode.

5. The method as claimed in claim 3, further comprising a plurality of selectable buttons, wherein information regarding the display state is stored differently in each of the plurality of buttons.

6. The method according to any preceding claim, wherein the storing the information comprises:
setting a layout of the screen; matching the plurality of applications to divided screens generated by the layout; and storing information regarding the divided screens to which the plurality of applications are matched.

7. The method as claimed in claim 6, wherein the displaying the screen comprises displaying the plurality of applications on the divided screens based on a size of the divided screen to which each application is matched.

8. The method as claimed in claim 6, wherein the matching the plurality of applications comprises matching the plurality of applications to the divided screens as execution icons of the plurality of applications are dragged to the divided screens.

9. The method as claimed in claim 6, wherein the matching the plurality of applications comprises matching the plurality of applications to the divided screens as execution paths of the plurality of applications are directly input to the divided screens.

10. The method according to any preceding claim, wherein the storing the information comprises storing at least one of information regarding a setting state of the plurality of applications, information regarding a storage state, and information regarding a work state together with information regarding the display state, and wherein the displaying the screen comprises executing the plurality of applications based on the stored information.

11. The method according to any preceding claim, wherein the display state is customized by a user manipulation.

12. The method according to any preceding claim, wherein information regarding the display state of the plurality of applications represents a work environment in which the applications are executed, and wherein the displaying the screen comprises reproducing the work environment on a screen by executing the plurality of applications if the work environment is requested.

13. The method as claimed in claim 12, wherein the work environment comprises at least one of environments regarding the display state, a setting state, a storage state, and a work state of the plurality of applications.

14. A method according to any preceding claim, wherein the storing the information comprises: setting a layout of the screen to generate at least one divided screen; matching at least one application to the at least one divided screen; and storing information regarding the layout and a result of the matching; wherein the displaying the screen comprises displaying each divided screen to which the matched application is executed if a command is received.

15. An electronic device (100), comprising:
a storage unit (110) that stores information regarding a display state of a plurality of applications; and a control unit (120) that executes the plurality of applications and displays a screen according to the stored information.
